# EUROPEAN PATENT APPLICATION

(11) **EP 4 282 522 A1**
(43) Date of publication of application: **29.11.2023**
(21) Application number: 22187963.8
(22) Date of filing: 29.07.2022
(51) Int. Cl.: B01J 20/22, B01J 20/32, C02F 1/28

(54) **SILICA-SUPPORTED IONIC LIQUIDS FOR THE REMOVAL OF CYTOSTATICS FROM AQUEOUS SAMPLES**

(30) Priority: 26.05.2022 PT 2022118005; 31.05.2022 EP 22176589
(71) Applicant: Universidade de Aveiro, 3810-193 Aveiro (PT)
(72) Inventor: FREIRE MARTINS, Mara Guadalupe, 3810-696 AVEIRO (PT); CARVALHO NEVES, Márcia, 3830-154 ÍLHAVO (PT); NEVES FRANCISCO, Rafael, 3810-193 AVEIRO (PT); ALMEIDA SOUSA, Ana Catarina, 3810-193 AVEIRO (PT); MENDONÇA PEREIRA, Matheus, 3810-193 AVEIRO (PT); OSÓRIO DE ALMEIDA COELHO E SILVA, Ana Francisca, 3810-193 AVEIRO (PT); RIBEIRO VENÂNCIO, Cátia Alexandra, 3810-193 AVEIRO (PT); CUNHA ANTUNES LOPES, Isabel Maria, 3810-193 AVEIRO (PT)
(74) Representative: Patentree

(57) **Abstract**

The present disclosure relates to the use of a composition as adsorbent of a cytostatic compound in an aqueous solution, wherein the composition comprises an ionic liquid supported on a silica-based material, wherein the silica-based material is a silica particle, and the ionic liquid comprises an ammonium salt and a chloride anion. The present disclosure also relates to a portable device comprising the composition of the present disclosure, preferably in powdered format or granule format.

## Description

### TECHNICAL FIELD

The present disclosure relates to the development of silica-based materials functionalized with ammonium salts for application in the process of removing pharmaceuticals, particularly cytostatics, from aqueous samples, such as water; effluents, including domestic and hospital effluents; and biological samples, preferably urine. The present disclosure also comprises a portable filter device comprises the composition of the present disclosure.

### BACKGROUND

According to the latest Global Cancer Observatory (GLOBOCAN) report published in the journal CA: A Cancer Journal for Clinicians (2021: 71(3): 209-249), in 2020, there were 19.3 million cancer cases worldwide. According to the same report, the global cancer burden is expected to be 28.4 million cases in 2040, which corresponds to a 47% rise from 2020. Pharmaceutical advances in cancer treatment will allow these patients to live longer, partially thanks to the consumption of anti-cancer drugs such as cytostatics, for which the consumption is expected to increase in the upcoming years. Cytostatics are designed to preferably attack dividing cells, a classic characteristic of cancer cells that exhibit higher division rates. However, most of the cytostatics available in the market are not able to differentiate between healthy and cancer cells, and thus they are toxic to non-target tissues and organs. Cytostatics are considered mutagenic, carcinogenic, and also teratogenic. For these reasons, the disposal of these drugs is strictly regulated, as described in the World Health Organization Document "WHO, Safe management of wastes from health-care activities. 2nd ed. 2014". In occupational settings, including not only pharmaceutical industries but also hospitals and other health care facilities, all the products, objects and biological samples that were in contact with cytostatics must be incinerated as described in the Policy Recommendations of the European Parliament (Sessenk et al. 2016; "Preventing occupational exposure to cytotoxic and other hazardous drugs"). These biological samples include, e.g., faeces and urine from cancer patients undergoing chemotherapy. However, the patients treated inside hospitals are only a small fraction of the total number of cancer patients, whereas 80% of the cancer drugs delivered to outpatients are consumed and excreted outside hospitals (Besse et al. 2012; "Anticancer drugs in surface waters: What can we say about the occurrence and environmental significance of cytotoxic, cytostatic and endocrine therapy drugs?" Environ. Int. 39(1):73-86). In Portugal, e.g., data from the National Health Directorate report (DGS- Direção Geral de Saúde) "PORTUGAL Doenças Oncológicas em Números - 2015", reveals that the consumption of anticancer drugs by outpatients is higher than the consumption by hospitalized ones (3,2675,865 pack units prescribed to outpatients in 2014 vs. 2,451,916 units used at the hospital). The excretion of cytostatic drugs at home will result in the contamination of indoor surfaces and in consequent risks towards family members ((Yuki et al. 2015; "Secondary Exposure of Family Members to Cyclophosphamide After Chemotherapy of Outpatients With Cancer: A Pilot Study" Oncol Nurs Forum 42(6):665-671), (Yuki et al. 2012; "Exposure of family members to antineoplastic drugs via excreta of treated cancer patients" J. Oncol. Pharm. 19(3):208-217), (Yuki et al. 2014; "Evaluation of surface contamination with cyclophosphamide in the home setting of outpatients on cancer chemotherapy" J. Nurs. Educ. Pract. 4(10):16-23)). In order to minimize the risks associated with the exposure to cytostatics, several guidelines have been implemented, including, for instance, the need to flush two times after urination (Yuki et al. 2012; "Exposure of family members to antineoplastic drugs via excreta of treated cancer patients" J. Oncol. Pharm. 19(3):208-217). However, upon flushing, these drugs will reach Wastewater Treatment Plants (WWTPs) that are inefficient in removing/treating cytostatics as recently highlighted by Valente et al. in the book chapter "Anticancer drugs in the environment: environmental levels and technological challenges" (in Emerging Contaminants in the Environment, 2022, Elsevier, doi: 10.1016/B978-0-323-85160-2.00006-8). This release has several impacts not only in the recipient ecosystems (generally, rivers, lakes, and estuaries) but also in a broader scale of the water cycle, affecting surface waters and thus posing a threat to water quality. Cytostatics have already been detected in water for human consumption, including tap water (Jureczko et al. 2020; "Cytostatic pharmaceuticals as water contaminants" Eur. J. Pharmacol. 866(5):172816). Furthermore, these compounds are toxic to a wide range of organisms, from plankton to vertebrates, negatively affecting the aquatic ecosystems health as recently highlighted in the report (Jureczko et al. 2020; "Cytostatic pharmaceuticals as water contaminants" Eur. J. Pharmacol. 866(5):172816). To improve the ability of WWTPs to treat these chemicals, several new technologies have been proposed, namely nanofiltration, photo-assisted oxidation process, and ozonation as described by Valente et al. ("Anticancer drugs in the environment: environmental levels and technological challenges"; doi:10.1016/B978-0-323-85160-2.00006-8). However, these technologies are difficult to implement in all domestic WWTPs. Therefore, the development of technologies that could efficiently prevent the introduction of these highly toxic pharmaceuticals in the environment is still required.

Generally, urine represents the main source of contamination by active pharmaceutical ingredients (APIs) in WWTPs (Escher et al. 2006; "Monitoring the Removal Efficiency of Pharmaceuticals and Hormones in Different Treatment Processes of Source-Separated Urine with Bioassays" Environ. Sci. Technol 40(16):5095-5101). Indeed, the cytostatics after being administered, are excreted through urine, entering the urban water cycle, and reaching the effluents of the WWTPs. Because the current available treatments do not efficiently remove cytostatics from the effluents, they will enter the aquatic environment. To prevent the entrance of these highly toxic compounds in the environment, and mitigate the detrimental impacts in the ecosystem, it is necessary to efficiently remove these cytostatics from WWTP effluents or to avoid their introduction in the WWTP by removing the cytostatics at the point source, i.e., urine. Furthermore, when already in water bodies, cytostatics also need to be removed if the water is intended for human consumption.

The urine-source separation concept is already well established, particularly for nutrients removal and fertilizers production (Lienert et al. 2010; "High Acceptance of Urine Source Separation in Seven European Countries: A Review" Environ. Sci. Technol 44(2):556-566). Given such facts, the point source removal of cytostatics from the urine of cancer patients is a promising alternative that can prevent not only their environmental release into the wastewater cycle, but also reduces the possibilities of cross-contamination at the patients' houses, minimizing the risk of exposure to other family members.

Materials comprising modified silica were already successfully used in the extraction of amines and aldehydes with extraction efficiencies ranging from 87-100 % and 0-37 %, respectively (Vidal et al. 2012; "Ionic liquid-functionalized silica for selective solid-phase extraction of organic acids, amines and aldehydes" J. Chromatogr. A 1226:2-10). Additionally, functionalized silica-based materials have max removal capacity of 63.5% for acetylsalicylic acid (Bernardo et al. 2020; "Supported ionic liquids for the efficient removal of acetylsalicylic acid from aqueous solutions" Eur. J. Inorg. Chem. 24:2380-2389) and 100 % for sodium diclofenac (Almeida et al. 2020; "Supported ionic liquids as efficient materials to remove non-steroidal anti-inflammatory drugs from aqueous media" Chem. Eng. J. 381:122616). More recently, these materials were able to remove several pesticides (imidacloprid, acetamiprid, thiacloprid and thiamethoxam) with adsorption efficiencies up to 77% (Francisco et al. 2022; "High performance of ionic-liquid-based materials to remove insecticides" Int. J. Mol. Sci.23(6):2989). Supported Ionic Liquids (SILs), yet based on polymers instead of silica, were also used for APIs removal from aqueous samples ((Fontanals et al. 2009; "Supported imidazolium ionic liquid phases: A new material for solid-phase extraction" Talanta 80(1):250-256),(Bratkowska et al. 2012; "Comparison of different imidazolium supported ionic liquid polymeric phases with strong anion-exchange character for the extraction of acidic pharmaceuticals from complex environmental samples" J. Sep. Sci. 35(15):1953-1958)). Despite all these promising results, functionalized materials with ammonium-based salts were not yet applied for the removal of cytostatic drugs from aqueous samples. The removal of cytostatics from effluent samples has been an area of prolific research as reviewed by Valente et al. ("Anticancer drugs in the environment: environmental levels and technological challenges"; doi:10.1016/B978-0-323-85160-2.00006-8), yet the proposed technologies, e.g., advanced oxidation processes, biological treatments and chemical treatments with e.g. oxidizing agents, are largely based on the degradation of the cytostatics which will produce toxic subproducts/metabolites. Furthermore, they also tend to be energetically highly demanding. Some reports describe the use of physicochemical technologies that do not generate toxic substances and allows the removal of cytostatic from aqueous solution (Quiton et al. 2021; "Synthesis and catalytic utilization of bimetallic systems for wastewater remediation: A review" Chemosphere 262:128371). Adsorption methods have been shown as efficient method for extraction of cytostatic from water samples (Kovalova et al. 2013; "Elimination of micropollutants during post-treatment of hospital wastewater with powdered activated carbon, ozone, and UV" Environ. Sci. Technol. 47 (14):7899 - 7908). The adsorption based-process display several financial and technical advantages (application of low-cost materials and apparatus, low complexity of application and environment-friendly character). However, to achieve these standards, the materials applied as absorbents need to be designed for target application. The most common material applied for this aim is activated carbon (Mansour et al. 2018; "The use of activated carbon for the removal of pharmaceuticals from aqueous solutions: A review" Rev. Environ. Sci. Bio/Technol. 17:109 - 145). Activated carbon display high ability to remove several drugs from water samples (Guillossou et al. 2019; "Organic micropollutants in a large wastewater treatment plant: What are the benefits of an advanced treatment by activated carbon adsorption in comparison to conventional treatment?" Chemosphere 218:1050 - 1060). However, the lack of design ability of this material, is an important limitation if selectivity on the extraction is required.

Document US10369264B2 discloses a filter apparatus for removing chemotherapeutic agents from blood. The filter apparatus comprises a housing having an extraction medium composed by polymer-coated carbon cores. However, the present disclosure differs from the Doc. US10369264B2 as it presents a method for removing cytostatics from aqueous samples, allowing application of the developed materials and process to non-biological samples (domestic and hospital effluents).

Document CZ304931B6 describes a method and apparatus for removing platinum drugs and their metabolites from the urine of treated patients. The filter apparatus is composed of activated carbon. The method was applied for the sorption of platinum drugs and their metabolites. Despite showing the ability to remove these compounds, the method does not present selectivity, contrary to the present disclosure.

These facts are disclosed in order to illustrate the technical problem addressed by the present disclosure.

### GENERAL DESCRIPTION

The present disclosure relates to the development of silica-based materials functionalized with ammonium salts for application in the removal of toxic pharmaceuticals, particularly cytostatics, from aqueous solutions aiming to decrease the aqueous solutions toxicity.

In an embodiment, the developed materials are selective for the target cytostatics and can be applied in the treatment process of water; biological samples, particularly urine; and effluents (e.g., domestic and hospital effluents).

For the scope and interpretation of the present disclosure, the term "biological sample" or "biological samples" refers to a sample of material from humans, or animals; preferably it refers to human or animal urine.

The present disclosure concerns the development of a method for removing cytostatics from aqueous samples, allowing its application in the removal of these compounds in water samples, such as wastewater or effluent samples (domestic and hospital), or in biological samples, preferably urine, using silica-based materials functionalized with ammonium salts, thus reducing sample's toxic potential.

The present disclosure aims to explore new materials able to effectively remove cytostatic drugs and their conjugated forms from aqueous solutions. These aqueous solutions include not only the effluents from the WWTPs but also water (including surface waters and water for human consumption) and urine.

In this context, the present disclosure is based on the development of silica-based materials functionalized with ammonium salts composed of an organic cation (based on imidazolium or a quaternary ammonium) and a chloride anion. Therefore, silica-based solid materials, which are low-cost and of biocompatible nature were functionalised with ammonium-based salts highly specific for the cytostatics under appraisal. No cross-contamination by the material constituents (i.e., IL and silica) to the aqueous solution was observed.

The present disclosure is based on the development of silica-based materials functionalized with ammonium salts composed of an organic cation (based on imidazolium or a quaternary ammonium) and a chloride anion.

In an embodiment, these materials are designed to be specific for the target cytostatics so that they can be applied in the removal of cytostatics from aqueous solutions, allowing to decrease to negligible levels the toxicity of the samples treated by the proposed method.

In an embodiment, an aqueous solution containing the target cytostatics was used as a model sample. Firstly, the silica-based materials functionalized with ammonium salts with specificity to the target cytostatics were synthesized and characterized. Then, an initial adsorption screening for all cytostatic drugs was performed. After this initial screening, the most promising materials were selected, and studies of adsorption kinetics were performed. These adsorption kinetics studies allowed to determine the minimum contact time required to remove the maximum quantity of cytostatic drugs from the aqueous solutions. Then, adsorption isotherms studies were performed to evaluate the maximum of cytostatic drug that could be absorbed by the silica-based materials functionalized with ammonium salts.

The use of a composition as described in the present disclosure is useful for application in the removal of pharmaceuticals, namely cytostatics, from aqueous samples and can be applied in the treatment process of i) water samples, including freshwater samples and water for human consumption samples; ii) biological samples, including urine; and iii) domestic and hospital effluents. The removal of cytostatics from biological samples, in particular urine, before it enters into the sewage system allows for the removal of toxic compounds in an early stage, thus reducing the costs of wastewater treatment.

The present disclosure relates to the use of a composition as an adsorbent of a cytostatic compound in an aqueous solution, wherein the composition comprises an ionic liquid supported on a silica-based material, wherein the silica-based material is a silica particle, preferably a silica microparticle, and the ionic liquid comprises an ammonium salt and a chloride anion.

In an embodiment, the cytostatic compound is selected from cyclophosphamide, mycophenolate mofetil, mycophenolic acid, capacetabine, or mixtures thereof.

In an embodiment, the aqueous solution is wastewater, biological sample, in particular urine, domestic effluents, or hospital effluents. In a preferred embodiment, the aqueous solution is urine.

In an embodiment, the ammonium salt is a quaternary ammonium or an imidazol.

In an embodiment, the ammonium salt is selected from 1-methylimidazole, N, N-dimethylbutylamine, tributylamine, triethylamine, or trioctylamine.

In an embodiment, 17 to 68 mg of the cytostatic compound are adsorbed per gram of the ionic liquid supported on a silica-based material.

In an embodiment, the adsorption efficiency of the cytostatic compound into the composition ranges from 14 to 98 %.

In an embodiment, the cytostatic compound is removed from the aqueous solution after a contact time that ranges from 5 to 120 minutes, preferably from 10 to 30 minutes.

In an embodiment, the ionic liquid supported on a silica-based material is dispersed in the aqueous solution.

In an embodiment, the concentration of the ionic liquid supported on a silica-based material in the aqueous solution ranges from 1 mg/ml to 10 mg/ml.

In an embodiment, the disclosed composition comprises silica functionalized with trioctyllpropylammonium chloride ([Si][N₃₈₈₈]Cl), wherein 60 to 70 mg of cyclophosphamide are adsorbed per gram of composition in 120 min.

In another embodiment, the disclosed composition comprises silica functionalized with triethylpropylammonium chloride ([Si][N₃₂₂₂]Cl), wherein 30 to 35 mg of mycophenolate mofetil are adsorbed per gram of composition in 10 min.

In another embodiment the composition comprises silica functionalized with triethylpropylammonium chloride ([Si][N₃₂₂₂]Cl), wherein 15 to 20mg of mycophenolic acid are adsorbed per gram of composition in 10 min.

In another embodiment the composition comprises silica functionalized with triethylpropylammonium chloride ([Si][N₃₂₂₂]Cl), wherein 25 to 30mg of capecitabine acid are adsorbed per gram of composition in 10 min.

An aspect of the present disclosure relates to a portable device for removing cytostatics from an aqueous solution, comprising: a first opening to receive the aqueous solution; a filtering cartridge comprising an ionic liquid supported on a silica-based material, wherein the ionic liquid comprises an ammonium salt and a chloride anion; a support for holding the filtering cartridge; and a second opening to expel the aqueous solution, wherein the aqueous solution flows from the first opening to the second opening through the filtering unit, and wherein the cytostatics are retained at the filtering unit.

In an embodiment, the portable device is attachable to a toilet bowl or is a handheld device.

In an embodiment, the silica-based material is silica gel 60, preferably silica gel 60 powder with a particle diameter ranging from 0.2 to 0.5 mm.

In an embodiment, the filtering cartridge is a removable and/or disposable cartridge.

The present disclosure also relates to a disposable cartridge for removing cytostatics from an aqueous solution, said cartridge comprising an ionic liquid supported on a silica-based material, wherein the ionic liquid comprises an ammonium salt cation and a chloride anion as described in the present disclosure.

### BRIEF DESCRIPTION OF THE DRAWINGS

The following figures provide preferred embodiments for illustrating the disclosure and should not be seen as limiting the scope of invention.

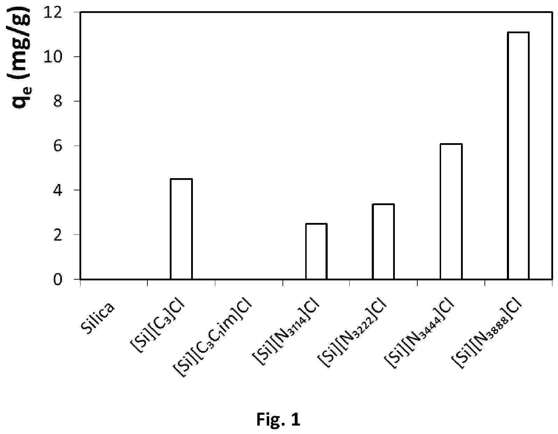

**Figure 1****:** Embodiment of results of adsorption capacity (equilibrium adsorption capacity (qₑ), mg/g) of cyclophosphamide, using silica-based materials functionalized with ammonium salts (silica functionalized with 1-methyl-3-propylimidazolium chloride [Si][C₃C₁im]Cl, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).

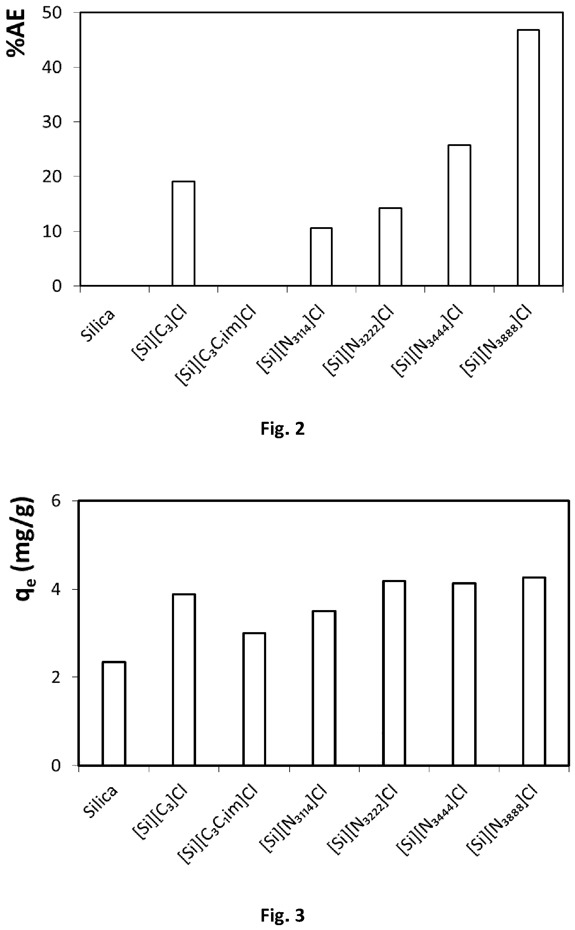

**Figure 2****:** Embodiment of results of adsorption efficiency (%AE) of cyclophosphamide, using silica-based materials functionalized with ammonium salts (silica functionalized with 1-methyl-3-propylimidazolium chloride [Si][C₃C₁im]CI, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).
**Figure 3****:** Embodiment of results of adsorption capacity (qe (mg/g)) of mycophenolate mofetil, using silica-based materials functionalized with ammonium salts (silica functionalized with 1-methyl-3-propylimidazolium chloride [Si][C₃C₁im]CI, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).

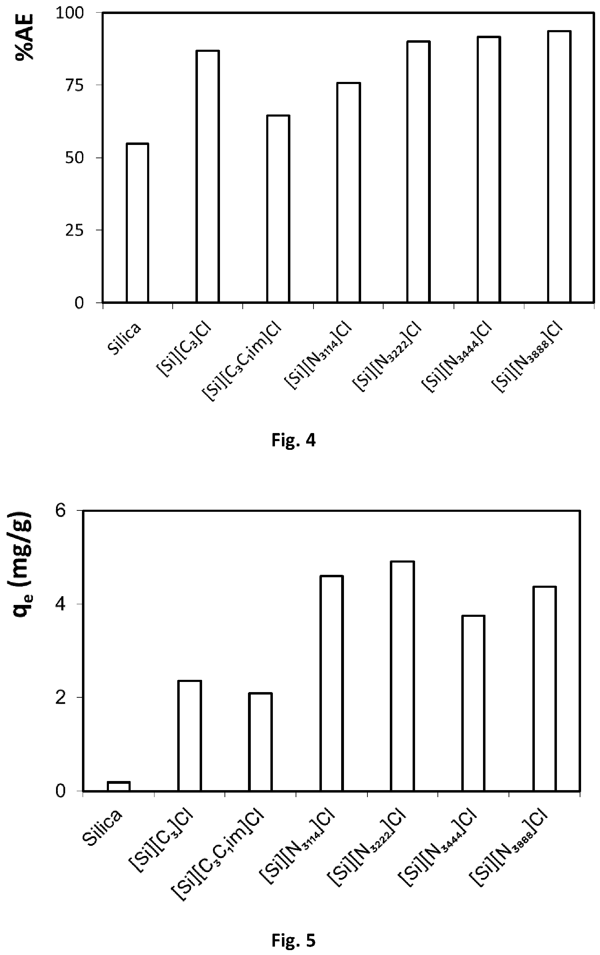

**Figure 4****:** Embodiment of results of adsorption efficiency (%AE) of mycophenolate mofetil, using silica-based materials functionalized with ammonium salts (silica functionalized with 1-methyl-3-propylimidazolium chloride [Si][C₃C₁im]CI, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).
**Figure 5****:** Embodiment of results of adsorption capacity (qe (mg/g)) of mycophenolic acid, using silica-based materials functionalized with ammonium salts (silica functionalized with 1-methyl-3-propylimidazolium chloride [Si][C₃C₁im]Cl, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).

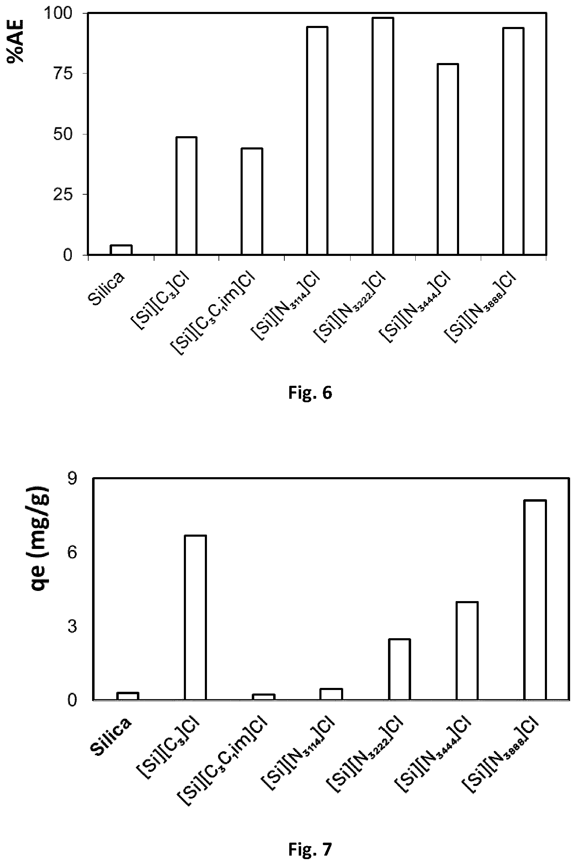

**Figure 6****:** Embodiment of results of adsorption efficiency (%AE) of mycophenolic acid, using silica-based materials functionalized with ammonium salts (silica functionalized with 1-methyl-3-propylimidazolium chloride [Si][C₃C₁im]Cl, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).
**Figure 7****:** Embodiment of results of adsorption capacity (qe (mg/g)) of capacetabine, using silica-based materials functionalized with ammonium salts (silica functionalized with 1-methyl-3-propylimidazolium chloride [Si][C₃C₁im]CI, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).

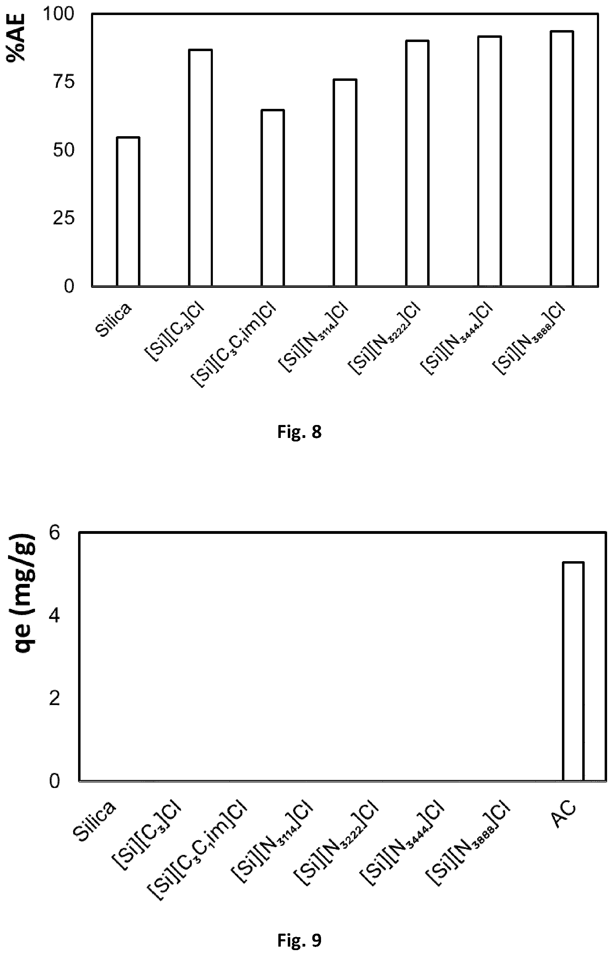

**Figure 8****:** Embodiment of results of adsorption efficiency (%AE) of capacetabine, using silica-based materials functionalized with ammonium salts (silica functionalized with 1-methyl-3-propylimidazolium chloride [Si][C₃C₁im]CI, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).
**Figure 9****:** Embodiment of results of adsorption capacity (qe (mg/g)) of 5- fluorouracil, using silica-based materials functionalized with ammonium salts (silica functionalized with 1-methyl-3-propylimidazolium chloride [Si][C₃C₁im]Cl, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl) and activated carbon.

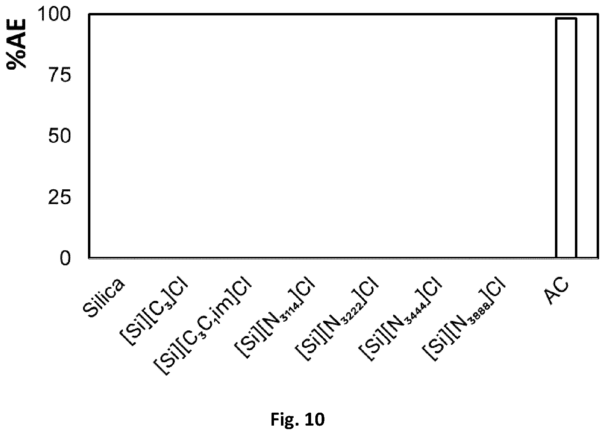

**Figure 10****:** Embodiment of results of adsorption efficiency (%AE) of 5- fluorouracil, using silica-based materials functionalized with ammonium salts (silica functionalized with 1-methyl-3-propylimidazolium chloride [Si][C₃C₁im]Cl, silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl) and activated carbon.

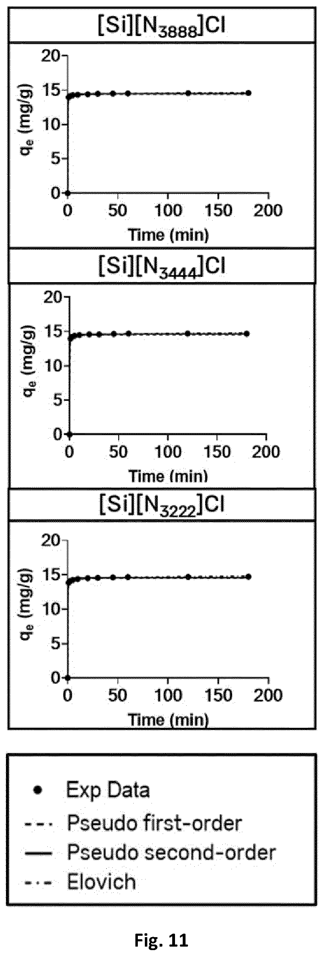

**Figure 11****:** Embodiment of results of adsorption capacity (qe (mg/g)) of cyclophosphamide as a function of time (min) and representation of pseudo first-order, pseudo second-order and Elovich kinetics models for silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl.

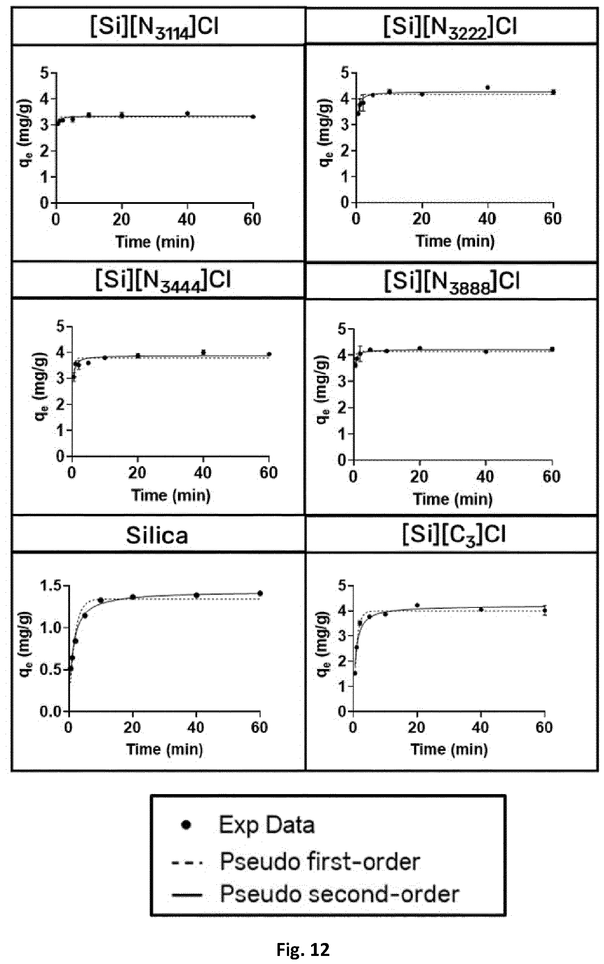

**Figure 12****:** Embodiment of results of adsorption capacity (qe (mg/g)) of mycophenolate mofetil as a function of time (min) and representation of pseudo first-order and pseudo second-order kinetics models using silica-based materials functionalized with ammonium salts (silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica and silica functionalized with the chlorosilane [Si][C₃]Cl).

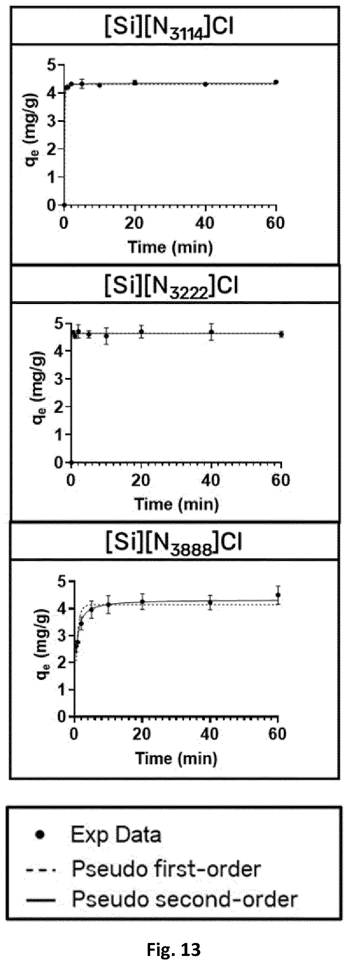

**Figure 13****:** Embodiment of results of adsorption capacity (qe (mg/g)) of mycophenolic acid as a function of time (min) and representation of pseudo first-order and pseudo second-order kinetics models using silica-based materials functionalized with ammonium salts (silica functionalized with dimethylpropylbutylammonium chloride [Si][N₃₁₁₄]Cl, silica functionalized with triethylpropylammonium chloride [Si][N₃₂₂₂]Cl, and silica functionalized with trioctyllpropylammonium chloride [Si][N₃₈₈₈]Cl).

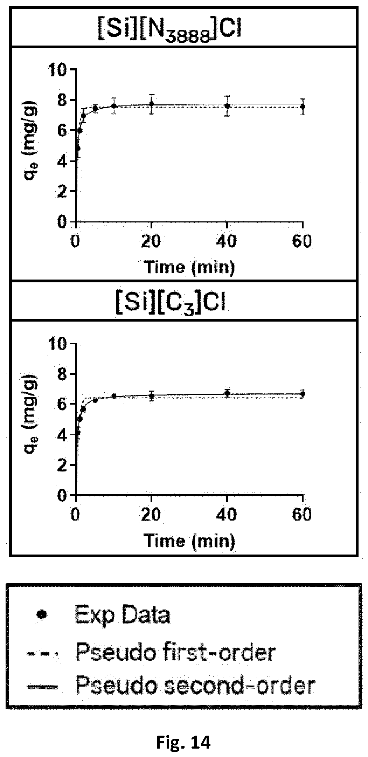

**Figure 14****:** Embodiment of results of adsorption capacity (qe (mg/g)) of capacetabine as a function of time (min) and representation of pseudo first-order and pseudo second-order kinetics models using silica-based materials functionalized with ammonium salts (silica functionalized with trioctyllpropylammonium chloride [Si][N₃₈₈₈] Cl) and the starting materials (silica functionalized with the chlorosilane [Si][C₃]Cl).

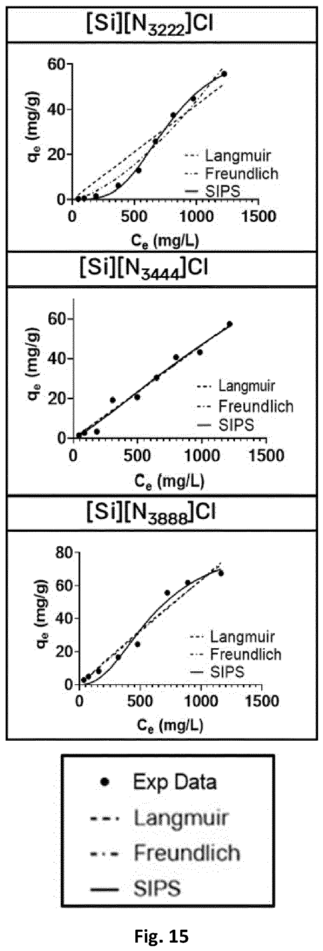

**Figure 15****:** Embodiment of results of adsorption capacity (qe (mg g⁻¹)) of cyclophosphamide as a function of equilibrium concentration (Ce) (mg L⁻¹) and representation of Langmuir, Freundlich and SIPS isotherm models using silica-based materials functionalized with ammonium salts (silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl).

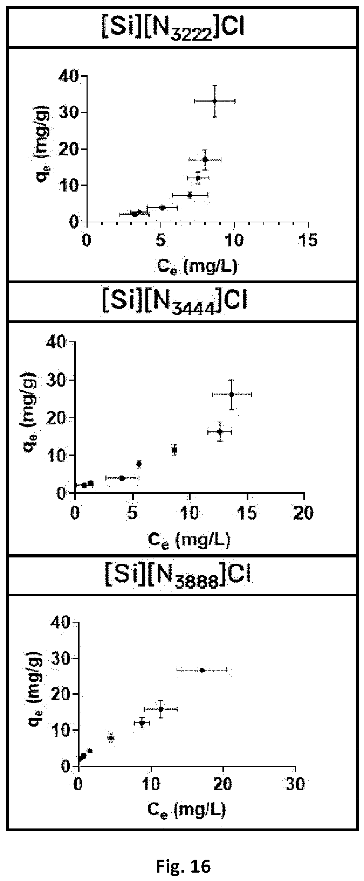

**Figure 16****:** Embodiment of results of adsorption capacity (qe (mg/g)) of mycophenolate mofetil as a function of Ce (mg L⁻¹) using silica-based materials functionalized with ammonium salts (silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl).

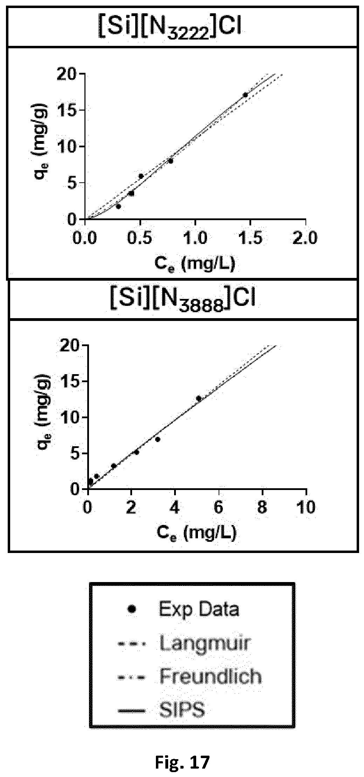

**Figure 17****:** Embodiment of results of adsorption capacity (qe (mg/g)) of mycophenolic acid as a function of Ce (mg L⁻¹) and representation of Langmuir, Freundlich and SIPS isotherm models using silica-based materials functionalized with ammonium salts (silica functionalized with triethylpropylammonium chloride [Si][N₃₂₂₂]Cl and silica functionalized with trioctyllpropylammonium chloride [Si][N₃₈₈₈]Cl).

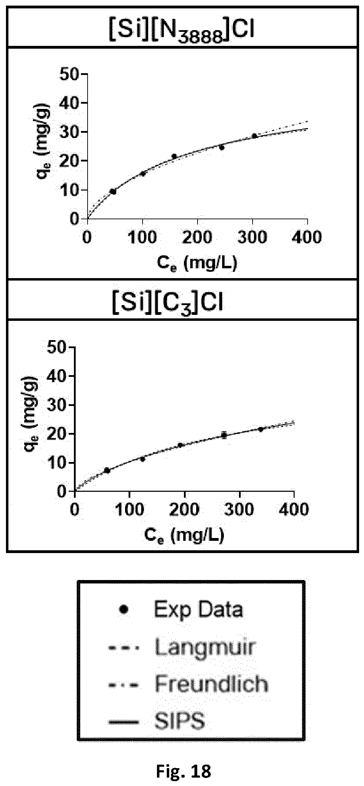

**Figure 18****:** Embodiment of results of adsorption capacity (qe (mg/g)) of capecitabine as a function of Ce (mg L⁻¹) and representation of Langmuir, Freundlich and SIPS isotherm models for using silica-based materials functionalized with ammonium salts (silica functionalized with trioctyllpropylammonium chloride [Si][N₃₈₈₈]Cl) and the starting materials (silica functionalized with the chlorosilane [Si][C₃]Cl).

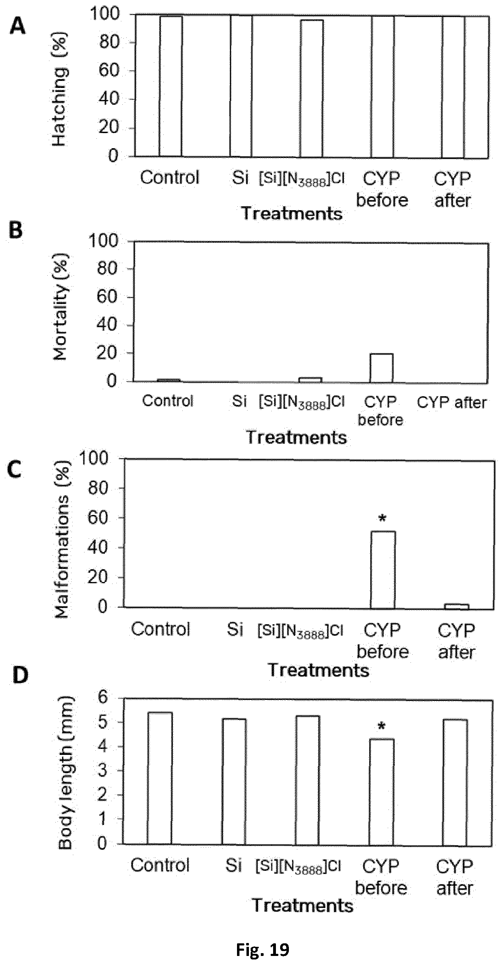

**Figure 19****:** Embodiment of results of mortality (a), hatching rates (b), malformations (c) and body length (d) in *Danio rerio* larvae after being exposed for 96 h to five different treatments: maintenance water (Control), silica (Si), silica functionalized with trioctyllpropylammonium chloride [Si][N₃₈₈₈]Cl (SIL), cyclophosphamide solution of 1306 mg L⁻¹ (CYP before), and cyclophosphamide solution of 1306 mg L⁻¹ after being in contact with silica functionalized with trioctyllpropylammonium chloride [Si][N₃₈₈₈]Cl (CYP after). ^{∗} indicates significant statistical difference in relation to control conditions (Dunn's test: p<0.05).

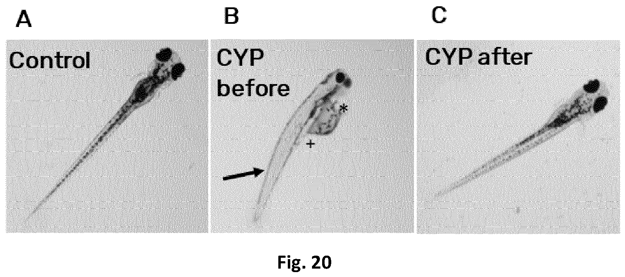

**Figure 20****:** Embodiment of results of malformations in *Danio rerio* larvae after a 96-h exposure. Larvae from control treatment (a), larvae exposed to a cyclophosphamide solution of 1306 mg L⁻¹ (b), and larvae exposed to cyclophosphamide (CYP) solution of 1306 mg L⁻¹ after being in contact with silica functionalized with trioctyllpropylammonium chloride [Si][N₃₈₈₈]Cl (c). Black arrow shows tail curvature, black asterisk indicates pericardial oedema and black x mark indicates ventral oedema. (Magnification of 2x). (Pictures are not related in size)

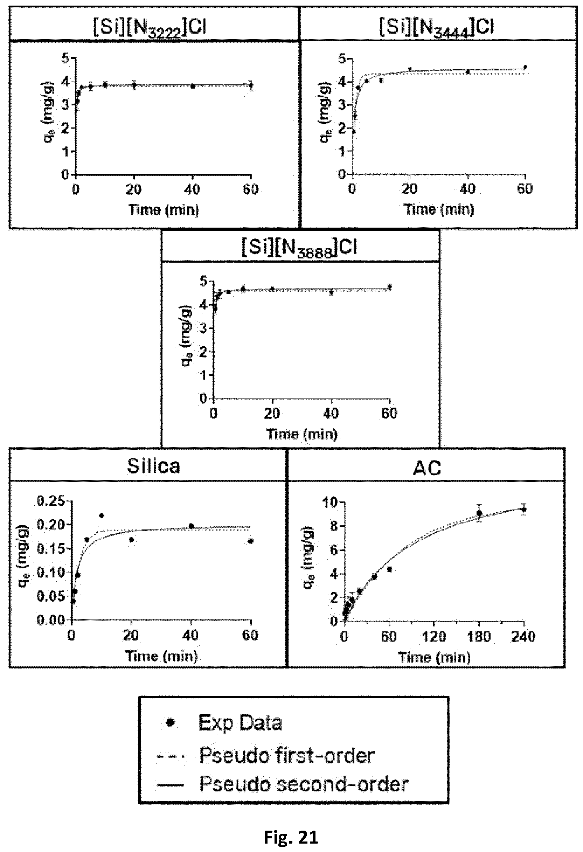

**Figure 21****:** Embodiment of results of adsorption capacity (qe (mg/g)) of mycophenolate mofetil in artificial urine as a function of time (min) and representation of pseudo first-order and pseudo second-order kinetics models using silica-based materials functionalized with ammonium salts (silica functionalized with triethylpropylammonium chloride [Si][N₃₂₂₂]Cl, silica functionalized with tributylpropylammonium chloride [Si][N₃₄₄₄]Cl, silica functionalized with trioctyllpropylammonium chloride [Si][N₃₈₈₈]Cl), the starting material (silica) and activated carbon (AC).

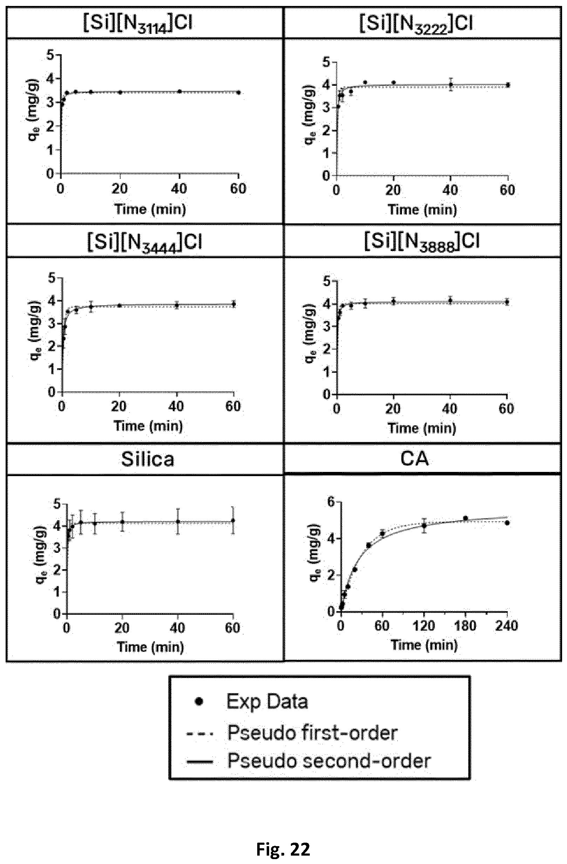

**Figure 22****:** Embodiment of results of adsorption capacity (qe (mg/g)) of mycophenolic acid in artificial urine as a function of time (min) and representation of pseudo first-order and pseudo second-order kinetics models using silica-based materials functionalized with ammonium salts (silica functionalized with dimethylpropylbutylammonium chloride [Si][N₃₁₁₄]Cl, silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and the starting materials (silica) and activated carbon (AC).

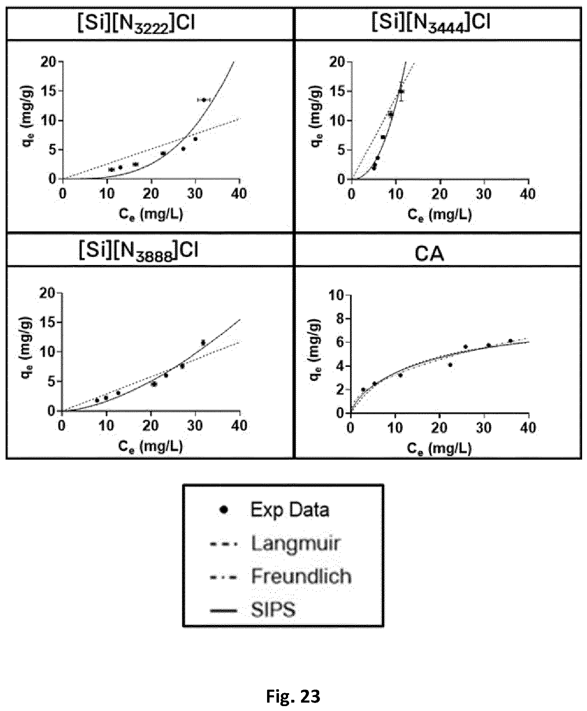

**Figure 23****:** Embodiment of results of adsorption capacity (qe (mg/g)) of mycophenolate mofetil in artificial urine as a function of Ce (mg L⁻¹) and representation of Langmuir, Freundlich and SIPS isotherm models using silica-based materials functionalized with ammonium salts (silica functionalized with triethylpropylammonium chloride [Si][N₃₂₂₂]Cl, silica functionalized with tributylpropylammonium chloride [Si][N₃₄₄₄]Cl and silica functionalized with trioctyllpropylammonium chloride [Si][N₃₈₈₈]Cl) and activated carbon (AC).

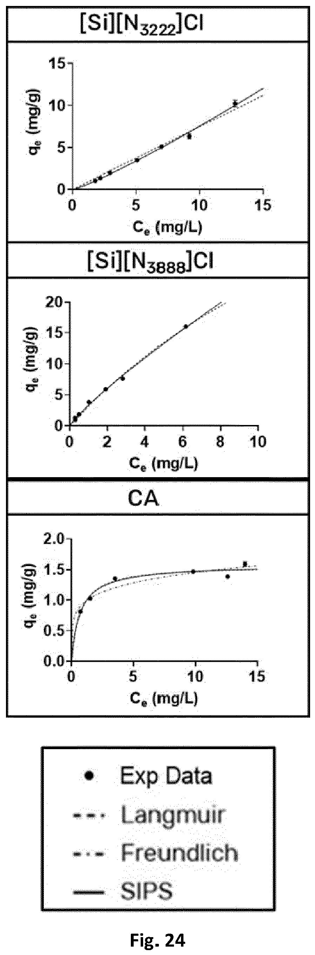

**Figure 24****:** Embodiment of results of adsorption capacity (qe (mg/g)) of mycophenolic acid in artificial urine as a function of Ce (mg L⁻¹) and representation of Langmuir, Freundlich and SIPS isotherm models for using silica-based materials functionalized with ammonium salts (silica functionalized with triethylpropylammonium chloride [Si][N₃₂₂₂]Cl and silica functionalized with trioctyllpropylammonium chloride [Si][N₃₈₈₈]Cl) and activated carbon (AC).

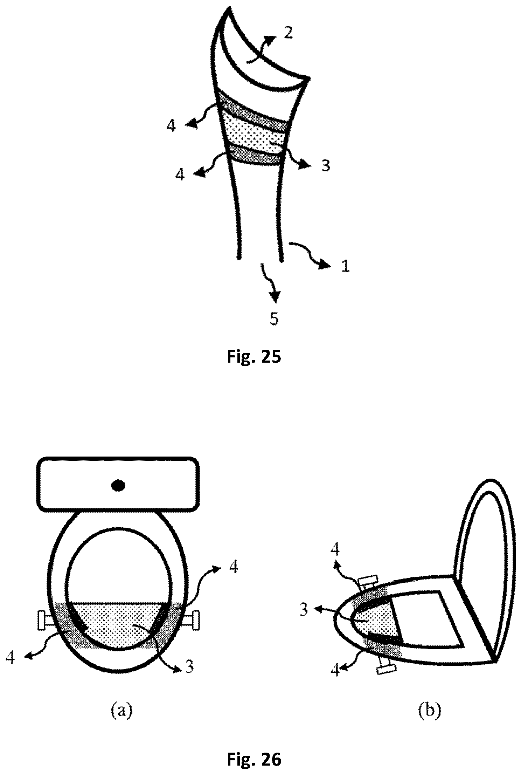

**Figure 25****:** Schematic representation of an embodiment of the portable device **1** described in the present disclosure, with a first **2** and a second **5** opening and a filtering cartridge **3** comprising the functionalized materials, wherein the filtering cartridge **3** is supported by a support **4,** delimited by two frits.
**Figure 26****:** Schematic representation of an embodiment of the portable device **1** described in the present disclosure attached to a toilet bowl **6.** Top view of the toilet bowl with the portable device (a), and perspective view of the toilet bowl with the portable device **1** attached (b).

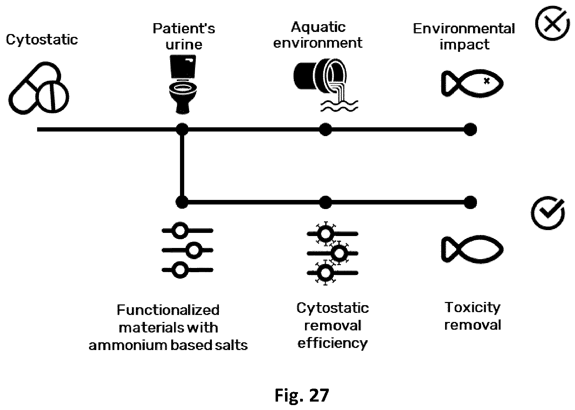

**Figure 27****:** Schematic representation of an embodiment of application of the use of a composition as adsorbent of a pharmaceutical compound in an aqueous solution as described in the present application.

### DETAILED DESCRIPTION

The present disclosure relates to the use of a composition as adsorbent of a cytostatic compound in an aqueous solution, wherein the composition comprises an ionic liquid supported on a silica-based material, wherein the silica-based material is a silica particle, preferably a silica microparticle, and the ionic liquid comprises an ammonium salt and a chloride anion. The present disclosure also relates to a portable device comprising the composition of the present disclosure, preferably in powdered format or granule format.

The present disclosure contemplates the development of a process for removing cytostatics from aqueous solutions, namely cyclophosphamide, mycophenolate mofetil, mycophenolic acid and capecitabine, using silica-based materials functionalized with ammonium salts.

In a detailed manner, the cytostatics removal process developed in the present disclosure can be carried out in two sequential stages. The first stage concerning the functionalization of the silica with the ammonium salts with selectivity for the cytostatics and the second one concerning the removal of the cytostatics from aqueous solutions by adsorption using the obtained silica-based materials functionalized with ammonium salts.

In an embodiment, the first stage concerns the development of the silica-based materials functionalized with ammonium salts that are specific for the target cytostatics. The procedure is largely based on the one already described for the functionalization of silica-based materials, although for a different goal ((Bernardo et al. 2020; "Supported ionic liquids for the efficient removal of acetylsalicylic acid from aqueous solutions" Eur. J. Inorg. Chem. 24:2380-2389), (Almeida et al. 2020; "Supported ionic liquids as efficient materials to remove non-steroidal anti-inflammatory drugs from aqueous media" Chem. Eng. J. 381:122616)).

In an embodiment, the initial step concerns the activation of the silica. For this purpose, silica gel with pore size between 40 Å (4.0 × 10⁻⁶ mm) and 80 Å (8.0 × 10⁻⁶ mm), preferably 60 Å (0.2-0.5 mm) is left in contact with hydrochloric acid for 24h at room temperature. After the 24h period, the silica is washed with distilled water to remove the acid and the removal of hydrochloric acid is checked by pH measurements of the wash solution, which should increase until it reaches the pH of distilled water (approximately pH 7). After the washing process, the activated silica is submitted to a drying process at 55 °C for 24h, thus removing residual water from the sample.

Then, a suspension containing 5 g of the activated silica, 60 mL of toluene and 5 mL of 3-chloropropyltrimethoxysilane is placed in a round bottom flask with a reflux condenser. The prepared suspension should be subjected to reflux under magnetic stirring at a temperature of 105 °C for 24h. Afterwards, the yellowish solid resulting from the reaction shall be filtered and washed according to the following sequence: 1) Wash with 100 mL of toluene; 2) Wash with 200 mL of a mixture ethanol:water 1:1 (v/v); 3) Wash with 500 mL of distilled water; 4) Wash with 100 mL of methanol. After these sequential washes, the material should be dried in an oven at 50 °C for 24 hours, to remove all solvents from the wash. The material obtained in this step is the intermediate material or [Si][C₃]Cl. The next step consists in the functionalization of the material. In an embodiment, 5 g of the intermediate [Si][C₃]Cl, 50 mL of toluene and 5 mL of 1-methylimidazole are placed in a round bottom flask at reflux under magnetic stirring for 24h. The material is then filtered and washed using the solvents and mixtures in the following order: with 100 mL of toluene, then with 350 mL of methanol, then with 350 mL of water, and finally with 150 mL of methanol. After the washing process, the material is dried in an oven at 50 °C for 24h. In this step, the silica-based materials obtained are based on the ammonium salt propylmethylimidazolium chloride ([Si][C₃C₁im]Cl). In order to synthesize the silica-based materials functionalized with ammonium salts containing different cations, the same procedure described above is repeated, replacing 1-methylimidazole, by N, N-Dimethylbutylamine, Tributylamine, Triethylamine, Trioctylamine, thus obtaining the following silica-based materials functionalized with ammonium salts: [Si][N₃₁₁₄]Cl, [Si][N₃₂₂₂]Cl, [Si][N₃₄₄₄]Cl and [Si][N₃₈₈₈]Cl, respectively.

In an embodiment, the mass of ionic liquid per gram of material were: 0.162 mg/g for [Si][C₃C₁im]Cl), 0.099 mg/g for [Si][N₃₁₁₄]Cl, 0.034 mg/g for [Si][N₃₂₂₂]Cl, 0.028 mg/g for [Si][N₃₄₄₄]Cl and 0.022 mg/g for [Si][N₃₈₈₈]Cl.

In an embodiment, the second step concerns the removal of the cytostatics from aqueous samples by adsorption using silica-based materials functionalized with ammonium salts. At first, preliminary adsorption tests were carried out. Suspensions containing 50 mg of each starting materials (silica and [Si][C_{3]}Cl), the ammonium salt based materials ([Si][N₃₁₁₄]Cl, [Si][N₃₂₂₂]Cl, [Si][N₃₄₄₄]Cl and [Si][N₃₈₈₈]Cl), and 10 mL of aqueous solutions containing the cytostatics (cyclophosphamide (118 mg L⁻¹), mycophenolate mofetil (23 mg L⁻¹), mycophenolic acid (25 mg L⁻¹), capacetabine (84 mg L⁻¹) and 5-fluorouracil (26 mg L⁻¹)) were kept under constant stirring (150 rpm) on an orbital shaker at 25 °C for 60 min. The adsorption capacities (qe (mg g⁻¹)) for cyclophosphamide were 11.1, 6.1 and 3.4 mg g⁻¹, with [Si][N₃₈₈₈]Cl, [Si][N₃₄₄₄]Cl and [Si][N₃₂₂₂]Cl respectively (Figure 1). The adsorption efficiency (%AE) values for cyclophosphamide were 46.8 % with [Si][N₃₈₈₈]Cl, 25.7 % with [Si][N₃₄₄₄]Cl and 14.2 % with [Si][N₃₂₂₂]Cl. These modest %AE values are due to high concentration of cyclophosphamide (118 mg L⁻¹) used in the assays, as %AE are dependent on the initial concentrations used. The adsorption capacities (qe (mg g⁻¹)) for mycophenolate mofetil were 4.2, 4.1 and 4.1 mg g⁻¹, with [Si][N₃₈₈₈]Cl, [Si][N₃₄₄₄]Cl and [Si][N₃₂₂₂]Cl respectively (Figure 3). The adsorption efficiency (%AE) values for mycophenolate mofetil were 93.5 % with [Si][N₃₈₈₈]Cl, 91.5% with [Si][N₃₄₄₄]Cl and 89.9% with [Si][N₃₂₂₂]Cl (Figure 4). The adsorption capacities (qe (mg g⁻¹)) for mycophenolic acid were 4.6 and 4.9 mg g⁻¹, with [Si][N₃₂₂₂]Cl and [Si][N₃₁₁₄]Cl respectively (Figure 5). The adsorption efficiency (%AE) values for mycophenolic acid were 98.0% with [Si][N₃₂₂₂]Cl and 94.1 % with [Si][N₃₁₁₄]Cl (Figure 6). The adsorption capacities (qe (mg g⁻¹)) for capacetabine were 8.1, 4.0 and 2.4 mg g⁻¹, with [Si][N₃₈₈₈]Cl, [Si][N₃₄₄₄]Cl and [Si][N₃₂₂₂]Cl respectively (Figure 7). The adsorption efficiency (%AE) values for capacetabine were 93.5 % with [Si][N₃₈₈₈]Cl, 91.5 % with [Si][N₃₄₄₄]Cl and 90.0 % with [Si][N₃₂₂₂]Cl (Figure 8). For 5-fluorouracil none of the silica-based materials functionalized with ammonium salts tested was able to remove this cytostatic from the aqueous solution. Such results disclose the high selectivity of the materials and highlight the need to efficiently design the materials to be specific for the target drug.

In an embodiment, the adsorption capacities were calculated by the equation *qe*=(*C*0-*Ce*/*m*)×*V,* and the adsorption efficiency was calculated by the equation *AE%* = (*C*0*-Ce*)/*C*0)× 100. The adsorption capacities experimental values were fitted using the pseudo-first-order equation: log (*qe-qt*)=log (*qe*)-(*k*1/2.303)*t*, pseudo-second-order equation: *dqt*/*dt*=*k*2(*qe-qt*)2 and Elovich's equation: *dqt*/*dt*=*α*(*-βqt*).

In an embodiment, after the identification of the silica-based materials functionalized with ammonium salts with higher removal capacity for each cytostatic, the adsorption kinetics tests were performed. For this purpose, aqueous solutions of each cytostatic (cyclophosphamide (90 mg L⁻¹), mycophenolate mofetil (20 mg L⁻¹), mycophenolic acid (25 mg L⁻¹) and capecitabine (50 mg L⁻¹)) were prepared, subsequently dispensed in aliquots of 10 mL each into Erlenmeyer's containing 50 mg of silica-based materials functionalized with ammonium salts. These suspensions were kept under stirring on an orbital shaker at 25 °C and 150 rpm. Each Erlenmeyer flask was removed at specific times, and the sample was centrifuged for 10 min at 12000 rpm for total deposition of the silica-based materials functionalized with ammonium salts. After centrifugation, the supernatant of each sample was filtered, and the cytostatics concentrations quantified. Cyclophosphamide was quantified by HPLC-DAD with a Reprosil C-18 analytical column (with porous spherical silica of 25 µm and pore diameter of 100Å and 250 × 4.6 mm in size) of GmbH. The temperature of the column was set at 25 °C. The mobile phase consisted of a mixture of acetonitrile (A) and water (B) in a ratio of 20:80 (v/v). Elution was performed at a flow rate of 1.0 mL/min and the injection volume was 20 µL. The wavelength for the quantification of cyclophosphamide was set to 197 nm. Mycophenolate mofetil, mycophenolic acid and capecitabine were quantified by UV-VIS (MMF-249nm, MPA-239nm, CAP-239nm and 5FU-266nm).

In an embodiment, the adsorption kinetics demonstrate that the plateau in the equilibrium concentration of cyclophosphamide in the solid phase (qe) was reached after 15 to 20 min of equilibrium, and was maintained for at least 180 min (Figure 11). Maximum equilibrium concentrations of cyclophosphamide in the solid phase (qe) of ca. 14.6 mg of cyclophosphamide per g of material was obtained with all three silica-based materials functionalized with ammonium salts ([Si][N₃₈₈₈]Cl, [Si][N₃₄₄₄]Cl and [Si][N₃₂₂₂]Cl).

In an embodiment, for mycophenolate mofetil, the plateau in the equilibrium concentration of in the solid phase (qe), was reached after 0.5 -1 min of equilibrium, and was kept for at least 60 min (Figure 12). Maximum equilibrium concentration of mycophenolate mofetil in the solid phase (qe) of ca. 4.3 mg of mycophenolate mofetil per g of silica-based materials functionalized with ammonium salt, was obtained using [Si][N₃₄₄₄]Cl.

In an embodiment, for mycophenolic acid, the plateau in the equilibrium concentration of in the solid phase (qe), was reached after 1 - 2 min of equilibrium, with the exception of [Si][N₃₈₈₈]Cl (10 min of equilibrium) and was kept for at least 60 min (Figure 13). Maximum equilibrium concentration of mycophenolic acid in the solid phase (qe) of ca. 4.6 mg of mycophenolic acid per g of silica-based materials functionalized with ammonium salt ([Si][N₃₂₂₂]Cl).

In an embodiment, for capecitabine, the plateau in the equilibrium concentration of capecitabine in the solid phase (qe), was reached after 1 - 2 min of equilibrium and was kept for at least 60 min (Figure 14). Maximum equilibrium concentration of capecitabine in the solid phase (qe) of ca. 7.7 mg of capecitabine per g of silica-based materials functionalized with ammonium salt ([Si][N₃₈₈₈]Cl).

In an embodiment, after identifying the contact time required for the cytostatic adsorption equilibrium to be established for maximum cytostatic removal using the silica-based materials functionalized with ammonium salts, the adsorption isotherms were determined.

In an embodiment to determine cyclophosphamide isotherms, 50 mg of the materials were placed in Erlenmeyer's with aqueous solutions with increasing concentrations of cyclophosphamide (between 50 mg L⁻¹ and 1500 mg L⁻¹).

In an embodiment to determine mycophenolate mofetil isotherms, 5 - 100 mg of the materials were placed in Erlenmeyer's with aqueous solutions of mycophenolate mofetil (40 mg L⁻¹).

In an embodiment to determine mycophenolic acid isotherms, 5 - 100 mg of the materials were placed in Erlenmeyer's with aqueous solutions of mycophenolic acid (20 mg L⁻¹).

In an embodiment to determine capecitabine isotherms, 25 mg of the materials were placed in Erlenmeyer's with aqueous solutions of capecitabine (50 mg L⁻¹).

After the determined contact time for each cytostatic (cyclophosphamide: 120 min, mycophenolate mofetil: 60 min, mycophenolic acid: 15 min and capacetabine: 60 min) the samples were centrifuged for 10 min at 12000 rpm to precipitate the materials. After centrifugation, the supernatant of each sample was filtered, and the cytostatics concentrations were determined. Cyclophosphamide concentration was quantified by HPLC-DA, whereas mycophenolate mofetil, mycophenolic acid and capacetabine were quantified by UV-VIS (MMF-249nm, MPA-239nm, CAP-239nm and 5FU-266nm).

In an embodiment, by analyzing the adjusted coefficient of determination(R²_{adj}) of the three isotherms for cyclophosphamide (Figure 15), it is possible to conclude that the model that best fits with [Si][N₃₈₈₈]Cl and [Si][N₃₂₂₂]Cl is the SIPS adsorption model with R²_{adj} of 0.9670 and 0.9966, respectively. For [Si][N₃₄₄₄]Cl the Freundlich model is the best fit with an R²_{adj} of 0.9715, however for this material there were almost no differences in the isotherms fitted with the Langmuir and Freundlich model. According to the results obtained, the highest qe was for the material [Si][N₃₈₈₈]Cl with experimental maximum of 67.6 mg of cyclophosphamide per g of material in 120 min.

In an embodiment, in the isotherms for mycophenolate mofetil (Figure 16), the model that best fits for all silica-based materials functionalized with ammonium salts ([Si][N₃₈₈₈]Cl, [Si][N₃₄₄₄]Cl and[Si][N₃₂₂₂]Cl) is the Freundlich model with R²_{adj} of 0.9680, 0.9184 and 0.9687, respectively. The Langmuir and SIPS model were not able to fit the isotherms for all the silica-based materials functionalized with ammonium salts. According to the results obtained, the highest qe was for the material [Si][N₃₂₂₂]Cl with experimental maximum of 33.1 mg of mycophenolate mofetil per g of material in 10 min.

In an embodiment, in the isotherms for mycophenolic acid (Figure 17), the model that best fits with [Si][N₃₈₈₈]Cl and [Si][N₃₂₂₂]Cl is the Freundlich model with R²_{adj} of 0.9734 and 0.9860, respectively. According to the results obtained, the highest qe was for the material [Si][N₃₂₂₂]Cl with experimental maximum of 17.1 mg of mycophenolic acid per g of material in 10 min.

In an embodiment, in the isotherms for capecitabine (Figure 18), the model that best fits with [Si][N₃₈₈₈]Cl and [Si][C₃]Cl is the SIPS model with R²_{adj} of 0.9912 and 0.9951, respectively. According to the results obtained, the highest qe was for the material [Si][N₃₈₈₈]Cl with experimental maximum of 28.7 mg of capecitabine per g of material in 10 min.

The present disclosure is more particularly described in the following examples that are intended as illustrative only since numerous modifications and variations are possible and will be apparent to those skilled in the art.

### Example 1. Removal of the model cytostatic cyclophosphamide from aqueous samples and reduction of the samples' toxicity to negligible values

In an embodiment, an experimental maximum of 67.6 mg of cyclophosphamide per g of [Si][N₃₈₈₈]Cl was observed, indicating that 1g of silica-based materials functionalized with ammonium salts is estimated to be enough to treat more than 180,000 L of water containing cyclophosphamide at concentrations that are environmentally relevant, e.g. those found for example in surface waters (375 ng L⁻¹) (Sadutto et al. 2021; "Pharmaceuticals and personal care products in a Mediterranean coastal wetland: Impact of anthropogenic and spatial factors and environmental risk assessment" Environ. Pollut. 271 (15): 116353) or even considering highly contaminated aqueous samples, such as urban effluents with concentrations around 13100 ng L⁻¹ (Klein et al. 2021; "Detection of anti-cancer drugs and metabolites in the effluents from a large Brazilian cancer hospital and an evaluation of ecotoxicology" Environ. Pollut. 268: 115857) 1g of this material has the ability treat more than 5,100 L of effluent.

Aiming to identify the ability of this material to decrease and/or remove the toxicity of the water samples treated, an ecotoxicity test was carried out resorting to assays with *Danio rerio* embryos. The cyclophosphamide concentration used in the toxicity assay (1306 mg L⁻¹) was chosen based on preliminary assays (Monteiro, B. A. R. (2021). Assessing the impacts of cytostatic drugs on freshwater biota. [Master's thesis, University of Aveiro]. Repositório Institucional da Universidade de Aveiro. https://ria.ua.pt/handle/10773/30682), and as such, it was a concentration known beforehand to cause significant effects on the survival and development of zebrafish embryos. Assays with embryos of *D. rerio* were performed according to the Organisation for Economic Co-operation and Development (OECD) guideline 236 on Fish Embryo Acute Toxicity (FET) Test (OECD, 2013), with small adaptations.

In an embodiment, five different treatments were considered for this assay: (1) a control group, that consisted solely of the water used in the maintenance of adult fishes, (2) a treatment to assess the toxicity of the silica, consisting of maintenance water after being in contact with the silica for 1.5 h, (3) a treatment to evaluate the toxicity of the material itself, consisting of maintenance water after being in contact with [Si][N₃₈₈₈]Cl for 1.5 h, (4) a treatment with an aqueous solution of cyclophosphamide at 1306 mg L⁻¹ (known beforehand to cause effects on *D. rerio* embryos), and (5) a treatment with the same cyclophosphamide solution (50 mL) after being in contact with 2 g of [Si][N₃₈₈₈]Cl in a batch experiment for 1.5 h (in which the adsorption of CYP was expected).

In an embodiment, apart from the control group which had 60 eggs, 30 eggs per treatment were transferred to 24-well plates in which a single egg was placed in each well with 1 mL of the respective test solution. Zebrafish embryos were exposed for 96 h, at a temperature of 26 ± 1 °C and a 16:8h light/dark photoperiod, and observations were made at each 24 h (i.e., 24, 48, 72, and 96 hours) with the help of a stereomicroscope (Zoom-SMZ 1500, Nikon Corporation).

In an embodiment, besides the mortality endpoint (that included coagulated eggs, arrested development, or lack of heartbeat), the sublethal endpoints concerning the hatching rate, final body length, and malformations (such as tail and skeletal malformations, oedemas, and delayed development) (Lammer et al. 2009; "Is the fish embryo toxicity test (FET) with the zebrafish (Danio rerio) a potential alternative for the fish acute toxicity test?" Comp. Biochem. Physiol. Part - C: Toxicol. Pharmacol. 149 (2):196 - 209) were also evaluated. The evaluation of sub-lethal endpoints is particularly relevant since cyclophosphamide has teratogenic properties. Mortality, hatching rate, and percentage of abnormalities were expressed considering the total number of embryos exposed to the different treatments, while the final body length endpoint was evaluated concerning the number of alive larvae at the end of the assay.

In an embodiment, the results of mortality, hatching rates, malformations, and final body length in embryos and larvae of *D. rerio* induced by the different treatments are presented in Fig. 19. In terms of mortality, both the silica and [Si][N₃₈₈₈]Cl did not cause any significant effects in the organisms, whereas the exposure to the cyclophosphamide solutions resulted in 20% of mortality (Fig. 19A). Moreover, the percentage of mortality was reduced to zero in organisms exposed to the cyclophosphamide solution that was previously in contact with [Si][N₃₈₈₈]Cl (Fig. 19A). Concerning the hatching rates, no significant differences were observed for all the tested treatments (Fig. 19B).

In an embodiment, as for the sublethal endpoint of malformations, it was once again observed that the silica and the [Si][N₃₈₈₈]Cl treatments, did not result in any effect on the organisms. Accordingly, to what was expected, the cyclophosphamide solution caused significant malformations in 52% of the zebrafish embryos/larvae that were exposed to this treatment (Fig. 19C; Dunn's test: p<0.05). The observed malformations were mainly oedemas (pericardial and/or ventral) and tail curvatures (Fig. 20B). Once more, in the treatment where the embryos were exposed to a cyclophosphamide solution after being in contact with [Si][N₃₈₈₈]Cl this value drops to residual levels (around 3%, which according to the guideline OECD (2013) is not statistically significant) (Fig. 19C, 20C). Regarding the effect of the different treatments on the final body length of zebrafish larvae, it was possible to observe that only the organisms exposed to the cyclophosphamide solution before being in contact with the materials exhibited significantly smaller lengths (an average length of 4.4 ± 0.4 cm, comparatively to the 5.4 ± 0.2 cm average from the control treatment) (Fig. 19D; Dunn's test: p<0.05).

### Example 2. Removal of mycophenolate mofetil (MMF) and mycophenolic acid (MPA) from synthetic urine

Aiming to use these materials to remove cytostatics directly at the point of source, i.e., urine, the removal of cytostatics from artificial urine was appraised.

In an embodiment, after the identification of the silica-based materials functionalized with ammonium salts with higher removal capacity for each cytostatic in aqueous solution, the adsorption kinetics tests were performed using artificial urine composed by 4 g L⁻¹ of NaCl and 1.6 g L⁻¹ of urea. For this purpose, artificial urine containing each cytostatic (mycophenolate mofetil (23 mg L⁻¹) and mycophenolic acid (24 mg L⁻¹)) were prepared, subsequently dispensed in aliquots of 10 mL each into Erlenmeyer's containing 50 mg of silica-based materials functionalized with ammonium salts, starting material, and activated carbon for comparison purposes. These suspensions were kept under stirring on an orbital shaker at 25 °C and 150 rpm. Each Erlenmeyer flask was removed at specific times, and the sample was centrifuged for 10 min at 12000 rpm for total deposition of the materials tested. After centrifugation, the supernatant of each sample was filtered, and the cytostatic concentrations quantified. Mycophenolate mofetil and mycophenolic acid were quantified by UV-VIS (MMF-249nm and MPA-239nm).

In an embodiment, the adsorption kinetics demonstrate that the plateau in the equilibrium concentration of mycophenolate mofetil, in the solid phase (qe) (Figure 21), was reached after 2 - 5 min of equilibrium for all silica-based materials functionalized with ammonium salts tested ([Si][N₃₈₈₈]Cl, [Si][N₃₄₄₄]Cl and [Si][N₃₂₂₂]Cl). For starting materials (silica) the plateau was reached after 5 min, and for activated carbon after 240 min. Maximum equilibrium concentration of mycophenolate mofetil in the solid phase (qe) of ca. 4.6 mg of mycophenolate mofetil per g of silica-based materials functionalized with ammonium salt, was obtained using [Si][N₃₈₈₈]Cl. Activated carbon also displayed high qe value (9.9 mg g⁻¹). However, to obtain this removal efficiency the time required is considerably higher in comparison with all silica-based materials functionalized with ammonium salt tested.

In another embodiment, for mycophenolic acid, the plateau in the equilibrium concentration of in the solid phase (qe), was reached after 2 - 5 min of equilibrium for all silica-based materials functionalized with ammonium salts tested ([Si][N₃₈₈₈]Cl, [Si][N₃₄₄₄]Cl and [Si][N₃₁₁₄]Cl), with the exception of [Si][N₃₂₂₂]Cl (10 min of equilibrium) and was kept for at least 60 min (Figure 22). For starting materials (silica) the plateau was reached after 20 min, and for activated carbon after 120 min. Maximum equilibrium concentration of mycophenolic acid in the solid phase (qe) of ca. 4.1 mg of mycophenolic acid per g of silica-based materials functionalized with ammonium salt ([Si][N₃₈₈₈]Cl). Activated carbon also displayed high qe value (5.1 mg g⁻¹). However, to obtain this removal efficiency the time required is considerably higher (120 min) in comparison with all silica-based materials functionalized with ammonium salt tested (2- 20 min).

After identifying the contact time required for the cytostatic adsorption equilibrium to be established for maximum cytostatic removal from artificial urine using the silica-based materials functionalized with ammonium salts and activated carbon the adsorption isotherms were determined.

In an embodiment, to determine mycophenolate mofetil isotherms, 5 - 100 mg of the materials were placed in Erlenmeyer's with artificial urine containing mycophenolate mofetil (40 mg L⁻¹).

In an embodiment, to determine mycophenolic acid isotherms, 5 - 100 mg of the materials were placed in Erlenmeyer's with artificial urine containing mycophenolic acid (20 mg L⁻¹).

After the determined contact time for each cytostatic (mycophenolate mofetil: 10 min and mycophenolic acid: 10 min) the samples were centrifuged for 10 min at 12000 rpm to precipitate the materials. After centrifugation, the supernatant of each sample was filtered, and the cytostatic concentrations were determined. Mycophenolate mofetil and mycophenolic acid were quantified by UV-VIS (MMF-249nm and MPA-239nm).

In an embodiment, in the isotherms for mycophenolate mofetil (Figure 23), the model that best fits for silica-based materials functionalized with ammonium salts ([Si][N₃₈₈₈]Cl and [Si][N₃₂₂₂]Cl) and activated carbon is the Freundlich model with R²_{adj} of 0.9570, 0.9869 and 0.9494, respectively. The Freundlich, Langmuir and SIPS model display inability to fit the isotherms with [Si][N₃₄₄₄]Cl. According to the results obtained, the highest qe was for the material [Si][N₃₂₂₂]Cl with experimental maximum of 14.9 mg of mycophenolate mofetil per g of material in 10 min. Activated carbon displayed qe value of 5.1 mg g⁻¹ (less than half of the value obtained using [Si][N₃₂₂₂]Cl).

In an embodiment, the isotherms for mycophenolic acid (Figure 24), the model that best fits with [Si][N₃₈₈₈]Cl and [Si][N₃₂₂₂]Cl is the Freundlich model with R²_{adj} of 0.9968 and 0.9950, respectively. For activated carbon the model that best fits is the SIPS model with R²_{adj} of 0.9424. According to the results obtained, the highest qe was for the material [Si][N₃₈₈₈]Cl with experimental maximum of 16.0 mg of mycophenolic acid per g of material in 10 min. Activated carbon displayed qe value of 1.5 mg g⁻¹ (around 10 times less than the value obtained using [Si][N₃₈₈₈]Cl). An experimental maximum of 16.0 mg of mycophenolic acid per g of [Si][N₃₈₈₈]Cl was observed, indicating that 1 g of silica-based materials functionalized with ammonium salts is estimated to be enough to treat 1.41 L of artificial urine containing mycophenolic acid that are clinically relevant, e.g. those found for example in oncological patients' urine (11.34 mg day⁻¹) (Lertdumrongluk et al. 2010; "Pharmacokinetics of mycophenolic acid in severe lupus nephritis" Kidney Int. 78(4):389-95)

In an embodiment, a column saturation test for mycophenolic acid, using a column apparatus with [Si][N₃₈₈₈]Cl was performed. In a further embodiment, the column apparatus consisted in a Econo-Pac^{®} Chromatography Column from BioRad packed with an amount of SIL ranging from 100 to 200 mg. A highly concentrated solution of mycophenolic acid prepared in artificial urine, was passed under continuous mode to saturate the SIL, by using a peristaltic pump. Afterwards, the solution was gathered in aliquots that were collected along time, being the amount of the cytostatic quantified by UV-VIS. According to the results obtained, the highest qe was registered for the material [Si][N₃₈₈₈]Cl with an experimental maximum of 45.3 mg of mycophenolic acid per g of material, indicating that 1 g of silica-based materials functionalized with ammonium salts is estimated to be enough to treat 3.99 L of artificial urine containing mycophenolic acid at concentrations that are clinically relevant, e.g. those found for example in oncological patients' urine (11.34 mg day⁻¹) (Lertdumrongluk et al. 2010; "Pharmacokinetics of mycophenolic acid in severe lupus nephritis" Kidney Int. 78(4):389-95).

In an embodiment, the materials are employed in a portable device **1** for removing cytostatics from an aqueous solution, to be used by cancer patients every time they urinate to adsorb the target cytostatics and prevent their release into the urban water cycle and thus to prevent their introduction in the environment.

In an embodiment, the portable device **1** comprises a first opening **2** to receive the aqueous solution, preferably urine; a filtering cartridge **3** comprising the disclosed composition, i.e., an ionic liquid supported on a silica-based material, wherein the ionic liquid comprises an ammonium salt and a chloride anion; a support **4** for holding the filtering cartridge; and a second **5** opening to expel the aqueous solution, wherein the aqueous solution flows from the first opening **2** to the second opening **5** through the filtering unit **3,** and wherein the cytostatics are retained at the filtering unit **3.**

I an embodiment, the filtering cartridge 3 is assembled in a similar way as of the column apparatus previously described, with the functionalized materials packed inside. In a further embodiment, the filtering cartridge **3** comprises a plastic or silicone body, wherein the functionalized materials are packed inside said body.

In an embodiment, the functionalized materials are obtained from the functionalization of powder commercial silica (e.g., silica gel 60, 0.2 and 0.5mm).

In an embodiment, portable device **1** comprises 7.5 g of powder functionalised silica-based materials which are assembled in the filtering cartridge **3.** The portable device **1** can be used as a urinal or that can be coupled with toilet seats and/or toilet bowls so that the patients can easily add/remove the filter before/after use.

In an embodiment, based on the average daily urination rate, and on the average concentration of cytostatic excreted, the portable device **1** can be used for up to one month. After this period, the filter can be disposed as biohazard waste (Type IV) and incinerated.

### Example 3. Selective removal of Capecitabine and 5-fluorouracil

In an embodiment, capecitabine is the pro-drug of 5-fluorouracil, being both drugs detected in the environment at concentrations up to 30 µg L⁻¹ and 124 µg L¹, respectively (Olalla et al. 2018; "A case study to identify priority cytostatic contaminants in hospital effluents" Chemosphere 190: 417-430; Mahnik et al 2007; "Fate of 5-fluorouracil, doxorubicin, epirubicin, and daunorubicin in hospital wastewater and their elimination by activated sludge and treatment in a membrane-bio-reactor system" Chemosphere 66(1):30-37).

For capacetabine the silica-based materials functionalized with ammonium salts tested were able to remove this cytostatic with adsorption efficiency (%AE) values of 93.5 % with [Si][N₃₈₈₈]Cl. On the other hand, none of the silica-based materials functionalized with ammonium salts tested was able to remove 5-fluorouracil. The removal of 5-fluorouracil was achieved using activated carbon (standard material) with an adsorption efficiency (%AE) value of 98.3 %. These results clearly demonstrate that the materials are not universal to all drugs, and that the optimization of each material to each target drug needs to be carefully addressed in order to produce selective and efficient materials for each specification.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above described embodiments are combinable.

The following claims further set out particular embodiments of the disclosure.

## Claims

1. Use of a composition as an adsorbent of a cytostatic compound in an aqueous solution, wherein the composition comprises an ionic liquid supported on a silica-based material, wherein the silica-based material is a silica particle and the ionic liquid comprises an ammonium salt and a chloride anion.

2. Use of a composition according to the previous claim wherein the cytostatic compound is selected from cyclophosphamide, mycophenolate mofetil, mycophenolic acid, capacetabine, or mixtures thereof.

3. Use of a composition according to any of the previous claims wherein the aqueous solution is wastewater, biological sample, in particular urine, domestic effluents, or hospital effluents.

4. Use of a composition according to any of the previous claims wherein the ammonium salt is a quaternary ammonium or an imidazol.

5. Use of a composition according to any of the previous claims wherein the ammonium salt is selected from 1-methylimidazole, N, N-dimethylbutylamine, tributylamine, triethylamine, or trioctylamine.

6. Use of a composition according to any of the previous claims wherein 17 to 68 mg of the cytostatic compound are adsorbed per gram of the ionic liquid supported on a silica-based material.

7. Use of a composition according to any of the previous claims wherein the adsorption efficiency of the cytostatic compound into the composition ranges from 14 to 98 %.

8. Use of a composition according to any of the previous claims wherein the cytostatic compound is removed from the aqueous solution after a contact time that ranges from 5 to 120 minutes, preferably from 10 to 30 minutes.

9. Use of a composition according to any of the previous claims wherein the ionic liquid supported on a silica-based material is dispersed in the aqueous solution.

10. Use of a composition according to any of the previous claims wherein the concentration of the ionic liquid supported on a silica-based material in the aqueous solution ranges from 1 mg/ml to 10 mg/ml.

11. Use of a composition according to any of the previous claims as an adsorbent of cyclophosphamide wherein the composition comprises silica functionalized with trioctyllpropylammonium chloride ([Si][N₃₈₈₈]Cl), wherein 60 to 70mg of cyclophosphamide are adsorbed per gram of composition in 120 min; or wherein the composition comprises silica functionalized with triethylpropylammonium chloride ([Si][N₃₂₂₂]Cl), wherein 30 to 35mg of mycophenolate mofetil are adsorbed per gram of composition in 10 min; or wherein the composition comprises silica functionalized with triethylpropylammonium chloride ([Si][N₃₂₂₂]Cl), wherein 15 to 20 mg of mycophenolic acid are adsorbed per gram of composition in 10 min; or wherein the composition comprises silica functionalized with triethylpropylammonium chloride ([Si][N₃₂₂₂]Cl), wherein 25 to 30 mg of capecitabine acid are adsorbed per gram of composition in 10 min.

12. A portable device (1) for removing cytostatics from an aqueous solution, comprising:
a first opening (2) to receive the aqueous solution;
a filtering cartridge (3) comprising an ionic liquid supported on a silica-based material, wherein
the ionic liquid comprises an ammonium salt and a chloride anion;
a support (4) for holding the filtering cartridge; and
a second opening (5) to expel the aqueous solution,
wherein the aqueous solution flows from the first opening (2) to the second opening (5) through the filtering unit (3), and wherein the cytostatics are retained at the filtering unit (3).

13. The portable device (1) according to the previous claim wherein the portable device (1) is attachable to a toilet bowl or is a handheld device.

14. The portable device (1) according to any of the previous claims 12-13 wherein the silica-based material is silica gel 60, preferably silica gel 60 powder with a particle diameter ranging from 0.2 to 0.5 mm.

15. A disposable cartridge for removing cytostatics from an aqueous solution, said cartridge comprising an ionic liquid supported on a silica-based material, wherein the ionic liquid comprises an ammonium salt cation and a chloride anion.
